# EUROPÄISCHE PATENTANMELDUNG

(11) **EP 3 923 095 A1**
(43) Veröffentlichungstag der Anmeldung: **15.12.2021**
(21) Anmeldenummer: 20178794.2
(22) Anmeldetag: 08.06.2020
(51) Int. Cl.: G05B 19/418

(54) **KONFIGURATIONSVORRICHTUNG, AKTUALISIERUNGSSERVER UND VERFAHREN FÜR EINE SOFTWAREAKTUALISIERUNG EINER TECHNISCHEN ANLAGE**

(71) Anmelder: Siemens Aktiengesellschaft, 80333 München (DE)
(72) Erfinder: Amrhein, Armin, 92245 Kümmersbruck (DE); Becker, Stefan, 91325 Adelsdorf (DE); Falk, Rainer, 85586 Poing (DE); Pfau, Axel, 80333 München (DE)

(57) **Zusammenfassung**

Mittels der Erfindung kann der Prozess einer Softwareaktualisierung für industrielle technische Anlagen verbessert werden.

## Beschreibung

Die Erfindung bezieht sich auf eine Konfigurationsvorrichtung, einen Aktualisierungsserver und Verfahren für eine Softwareaktualisierung einer technischen Anlage

Aufgabe der Erfindung ist es zu bestehenden Verfahren eine Alternative bereitzustellen.

Nachfolgend werden Aspekte der Erfindung erläutert.

Gemäß einem ersten Aspekt betrifft die Erfindung eine Konfigurationsvorrichtung zum Ermitteln einer Aktualisierungskonfiguration für eine Softwareaktualisierung für eine technische Anlage aufweisend:
- ein Erfassungsmodul, wobei
   ∘ das Erfassungsmodul dazu eingerichtet ist, Betriebsparameter eines Produktionsprozesses einer technischen Anlage zu erfassen,
   ∘ die Betriebsparameter Konfigurationsparameter der technischen Anlage umfassen,
   ∘ beispielsweise die Betriebsparameter des Produktionsprozesses der technischen Anlage durch ein Bewertungsmodul bewertet werden,
   ∘ beispielsweise die Betriebsparameter die Bewertung des Bewertungsmodules umfassen;
- ein Lademodul, wobei das Lademodul dazu eingerichtet ist, Softwareaktualisierungen für ein oder mehrere Elemente der technischen Anlage zu laden;
- ein Ermittlungsmodul, wobei
   ∘ das Ermittlungsmodul dazu eingerichtet ist, anhand der Betriebsparameter und der Softwareaktualisierungen eine Aktualisierungskonfiguration für die Softwareaktualisierungen der ein oder mehreren Elemente der technischen Anlage zu ermitteln,
   ∘ das Ermittlungsmodul beispielsweise dazu eingerichtet ist, die Aktualisierungskonfiguration anhand der Betriebsparameter und der Softwareaktualisierungen der ein oder mehreren Elemente der technischen Anlage zu optimieren;
- ein Bereitstellungsmodul, wobei das Bereitstellungsmodul dazu eingerichtet ist, die Aktualisierungskonfiguration und/oder die Softwareaktualisierungen einem Aktualisierungsserver zu übermitteln, wobei
   ∘ der Aktualisierungsserver die Softwareaktualisierung der ein oder mehreren Elemente der technischen Anlage anhand der Aktualisierungskonfiguration steuert und/oder überwacht und/oder aufzeichnet.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor oder programmierbaren Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einem "Modul" kann im Zusammenhang mit der Erfindung beispielsweise eine Schaltung eines Prozessors und/oder ein Speicher des Prozessors zum Speichern von Programmbefehlen verstanden werden. Beispielsweise ist die Schaltung speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder zu realisieren.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einem Speicher gespeichert ist) verstanden werden.

Im Kontext der Erfindung bedeutet "unaktualisiert" insbesondere, dass ein entsprechendes Element der technischen Anlage einen Softwarestatus (z. B. Softwareversion, Patch-Status) aufweist, der sich von dem Softwarestatus der Softwareaktualisierung unterscheidet. Beispielsweise kann es der Fall sein, dass einzelne Elemente (z. B. Geräte) der technischen Anlage nicht aktualisiert werden können, da für diese keine passende Softwareaktualisierung (z. B. Patch) vorliegt oder diese aus Konnektivitätsgründen oder Kompatibilitätsgründen mit einem mit ihnen verbunden Gerät nicht aktualisiert werden können. Es ist beispielsweise auch denkbar, dass die technische Anlage gleichartige oder baugleiche Elemente umfasst, diese jedoch teilweise unaktualisiert sind, da diese unaktualisierten Elemente aufgrund von Kompatibilitätsanforderungen für eine Softwareaktualisierung ungeeignet sind.

Unter "Softwareaktualisierung" und dergleichen kann im Zusammenhang mit der Erfindung beispielsweise ein Softwarepaket verstanden werden, das ein oder mehrere weitere Softwareaktualisierungen oder Softwarepakete umfasst. Eine Softwareaktualisierung kann auch ein Firmwareupdate sein oder ein Firmwareupdate umfassen. Die entsprechenden Softwareaktualisierungen werden beispielsweise dazu verwendet die Software oder Softwarekomponenten der technischen Anlage zu aktualisieren. Hierzu werden mittels der Erfindung beispielsweise die entsprechenden Softwarepakete entsprechend der Aktualisierungskonfiguration dazu verwendet, die Software oder Softwarekomponenten der technischen Anlage oder der Elemente der technischen Anlage zu aktualisieren. Bei einer Softwareaktualisierung können vorhandene Softwaremodule durch eine aktualisierte Version ersetzt werden. Es ist jedoch auch möglich, dass bei einer Softwareaktualisierung ein zusätzliches Softwaremodul zu einer Softwarekonfiguration hinzugefügt wird. Bei den Elementen der technischen Anlage kann es sich beispielsweise um Geräte und/oder Steuersysteme und/oder Softwarekomponenten und/oder Fertigungsmaschinen und/oder Feldgeräte handeln.

Die Erfindung ist dahingehend vorteilhaft, um beispielsweise mit der Aktualisierungskonfiguration (z. B. auch Patch-Plan genannt) das Planen, Automatisieren bzw. Durchführung von einer Automatisierung, Überwachen und Aufzeichnen der Softwareaktualisierung (z. B. auch Patching oder Patching-Maßnahmen genannt) der technischen Anlage (z. B. eine industriellen Anlage) und deren Elemente (z. B. einzelner Geräte, kritischer Anlagenteile) gegenüber heute in technischen Anlagen angewendeten Softwareaktualisierungsmethoden deutlich zu verbessern . Insbesondere hoch komplexe technische Anlagen, die mit einem geschickten Verknüpfungskonzept der Elemente mit dem Aktualisierungsserver verbunden sind, profitieren von der Aktualisierungskonfiguration z. B. in den Punkten Anwenderfreundlichkeit, Zeit- und Kostenersparnis erheblich. Es können z. B. Beeinträchtigungen oder Unterbrechungen im Produktionsprozess vermieden oder verringert werden. Dadurch können z. B. Produktionsausfälle oder eine verschlechterte Qualität der gefertigten Güter vermieden werden. Weiterhin wird z. B. dadurch ermöglicht, ein Patchen, insbesondere ein Einspielen von Security-Updates, zeitnah durchzuführen, da negative Auswirkungen eines Patchens auf einen laufenden Produktionsprozess vermieden oder zumindest verringert werden. Weiterhin ist es möglich, die Auswirkung einen oder mehrere Key-Performance-Indikatoren (KPI) einer Produktionsanlage zu verringern. Beispiele sind die Auslastung einer Produktionsanlage oder die Menge produzierter Güter.

Mittels des Optimierens kann z. B. die Fehleranfälligkeit der technischen Anlage bei der Softwareaktualisierung minimiert werden oder es können Abläufe optimierter ausgeführt werden (z. B. die Softwareaktualisierung für einzelne Elemente). Zudem kann durch eine kontinuierliche iterative Softwareaktualisierung (Patching) der technischen Anlage, die Anlage sich auf verändernden Anforderungen einstellen, um z. B. auf bestimmte Produktionsänderungen angepasst zu werden.

Mittels der Aktualisierungskonfiguration und dem Aktualisierungsserver wird z. B. eine verbesserte und automatisierte Softwareaktualisierung in industriellen Anlagen erreicht. Mit der Aktualisierungskonfiguration entsteht vorzugsweise eine detaillierte Übersicht über Aufgaben, Möglichkeiten, Einschränkungen und Randbedingungen für den Softwareaktualisierungs-Prozess in industriellen Anlagen bzw. technischen Anlagen.

Der Aktualisierungsserver bietet Unterstützung für die automatisierte Softwareaktualisierung und für das gesicherte Aufzeichnen des Softwareaktualisierungsstatus.

Bei der Softwareaktualisierung können vorzugsweise sowohl die entsprechenden einzelnen Elemente (z. B. einzelne Geräte) als auch die gesamte technische Anlage betrachtet werden.

Teilweise können z. B. unkritische Softwareaktualisierungsvorgänge voll automatisiert ablaufen, insbesondere im Zusammenspiel zwischen dem Gerät, das gepatcht werden muss und dem Aktualisierungsserver. Softwareaktualisierungsvorgänge können z. B. unkritisch sein, wenn deren Durchführung keine oder nur unwesentliche Auswirkungen auf einen Produktionsprozess oder auf Key-performance-Indikatoren eines Produktionsprozesses hat. Es kann sich z. B. dabei aber dennoch um eine Softwareaktualisierung handeln, die aus Security-Sicht wichtig ist, da durch sie eine kritische Schwachstelle geschlossen wird. Aufzeichnungen des gesamten Softwareaktualisierungsstatus einer technischen Anlage sind beispielsweis möglich. Die Aufzeichnungen können beispielsweise vor Manipulationen geschützt zur Verfügung gestellt werden. Die Aufzeichnungen können vorzugsweise einem Asset Management System in der entsprechenden technischen Anlage zur Verfügung gestellt werden.

Bei weiteren Ausführungsformen der Konfigurationsvorrichtung werden beim Ermitteln der Aktualisierungskonfiguration Betriebsvorgaben ermittelt, wobei die Betriebsvorgaben Vorgaben sind, die während und/oder nach der Durchführung der Softwareaktualisierung durch die technische Anlage und/oder von entsprechenden Elementen der technischen Anlage einzuhalten sind. Betriebsvorgaben können dabei beispielsweise Ausfallzeiten von Elementen (z. B. Geräten, Softwarekomponenten) der technischen Anlage, Aktualisierungszeiten von Elementen oder Betriebszustände (z. B. Prozessortemperatur, Speicherauslastung, Verwendbarkeit des Elementes trotz laufender Softwareaktualisierung) von Elementen sein. Die Betriebsvorgaben können dabei z. B. auch vorgeben, dass Neustarts notwendig oder verboten sind, es kann eine maximale Anzahl an Neustarts vorgegeben sein, es kann der Zeitbedarf vorgegeben sein oder wie lange eine erfolgreiche Durchführung einer Softwareaktualisierung dauern darf. Betriebsvorgaben können sich z. B. auch auf Key-Performance-Indikatoren der technischen Anlage beziehen, die abhängig von dem tatsächlichen Betrieb der technischen Anlage ermittelt werden, z. B. durch Ermitteln von Produktionsdaten und durch ein Berechnen von abgeleiteten Key-Performance-Indikatoren. Die Betriebsvorgaben können auch eine Kombination aus einem oder mehreren genannten Möglichkeiten sein.

Bei weiteren Ausführungsformen der Konfigurationsvorrichtung werden folgende Daten zusätzlich berücksichtigt:
- beim Ermitteln der Aktualisierungskonfiguration wird eine Aktualisierungsdauer von entsprechenden Elementen der technischen Anlage berücksichtigt, und/oder
- beim Ermitteln der Aktualisierungskonfiguration wird eine Rollbackdauer auf einen Zustand vor der Softwareaktualisierung der entsprechenden Elemente der technischen Anlage berücksichtigt, und/oder
- beim Ermitteln der Aktualisierungskonfiguration wird überprüft, ob ein Neustart der entsprechenden Elemente der technischen Anlage notwendig ist, oder ob eine Live-Aktualisierung der technischen Anlage möglich ist, und/oder
- beim Ermitteln der Aktualisierungskonfiguration wird ermittelt, welche Auswirkungen die Softwareaktualisierung auf die technische Anlage und/oder entsprechende Elemente der technischen Anlage während der Softwareaktualisierung und/oder nach der Softwareaktualisierung hat, und/oder
- beim Ermitteln der Aktualisierungskonfiguration wird eine erwartete Temperaturerhöhung von einem oder mehreren Prozessoren der technischen Anlage und/oder von entsprechenden Elementen der technischen Anlage berücksichtigt, und/oder
- beim Ermitteln der Aktualisierungskonfiguration wird der erforderliche Speicherplatz und die erforderliche Prozessorleistung für die Softwareaktualisierung berücksichtigt, und/oder
- beim Ermitteln der Aktualisierungskonfiguration wird eine Softwarekompatibilität mit der bestehenden Software und der Softwareaktualisierung berücksichtigt, und/oder
- beim Ermitteln der Aktualisierungskonfiguration werden Lizenzanforderungen berücksichtigt, und/oder
- beim Ermitteln der Aktualisierungskonfiguration wird eine Auswirkung auf die technische Anlage bei einer Softwareaktualisierung von mehreren Elementen der technischen Anlage berücksichtigt, und/oder
- beim Ermitteln der Aktualisierungskonfiguration wird eine Kompatibilität zwischen aktualisierten und unaktualisierten Elementen der technischen Anlage berücksichtigt, und/oder
- beim Ermitteln der Aktualisierungskonfiguration wird berücksichtigt, ob die Softwareaktualisierung automatisch durchführbar ist, oder ein manuelles Eingreifen erforderlich ist, und/oder
- beim Ermitteln der Aktualisierungskonfiguration werden notwendige Zugangsrechte berücksichtigt, und/oder
- beim Ermitteln der Aktualisierungskonfiguration wird berücksichtigt, ob eine automatisierte Prüfung von manuell durchgeführten Schritten durchführbar ist, und/oder
- beim Ermitteln der Aktualisierungskonfiguration wird berücksichtigt, ob die Softwareaktualisierung für ein entsprechendes Element angibt, wie diese zu installieren ist (z. B. ist eine lokale Installation möglich oder kann dies auch remote, beispielsweise über eine Fernwartungssoftware, erfolgen), und/oder
- beim Ermitteln der Aktualisierungskonfiguration können Erfahrungswerte aus früher durchgeführten Aktualisierungen einfließen und in Form von Verbesserungen umgesetzt werden.

Anhand der Erfahrungswerte kann z. B. die Softwareaktualisierung für die technische Anlage oder andere baugleiche technische Anlagen laufend verbessert werden, indem die Erfahrungswerte von vorhergehenden/früheren Softwareaktualisierung berücksichtigt werden.

Bei weiteren Ausführungsformen der Konfigurationsvorrichtung wird die Durchführung der Softwareaktualisierung und deren Auswirkungen auf die technische Anlage durch eine Simulation ermittelt.

Bei der bestehenden Software kann es sich beispielsweise um die Firmware von entsprechenden Elementen der technischen Anlage handeln oder auch Softwarekomponenten der entsprechenden Elemente handeln. Bei den Softwarekomponenten kann es sich z. B. um das installierte Betriebssystem und/oder die Version des installierten Betriebssystems und/oder der Patch-Status des installierten Betriebssystems und/oder die installierten Treiber und/oder der Patch-Status der installierten Treiber handeln. Bei den Softwarekomponenten kann es sich z. B. auch durch den Anwender eingebrachte Software handeln, wie z. B. die Konfiguration einer SPS oder eine App auf einem Edge Gerät.

Bei weiteren Ausführungsformen der Konfigurationsvorrichtung wird die Durchführung der Softwareaktualisierung der technischen Anlage simuliert, um deren Auswirkungen der Durchführung der Softwareaktualisierung auf die technische Anlage durch eine Simulation zu ermitteln.

Es wird dabei beispielsweise simuliert, wie sich die technische Anlage oder wie sich ausgewählte oder kritische Teile (z. B. bestimmte Elemente) der technischen Anlage während und nach der Softwareaktualisierung verhält. Dies ist insbesondere vorteilhaft, um eine Softwareaktualisierung während des laufenden Betriebes der technischen Anlage zu realisieren.

Die Auswirkungen können z. B. einem Benutzer angezeigt werden (z. B. für manuelle Freigabeentscheidungen, dass die Aktualisierungskonfiguration zulässig ist, oder für eine automatische Freigabeentscheidungen). Das Einspielen der Softwareaktualisierung erfolgt z. B. erst nach erfolgter Freigabe. Einem Nutzer können die unmittelbaren Auswirkungen angezeigt werden. Ebenso ist es möglich, dass Auswirkungen auf abgeleitete Information wie insbesondere Key-Performance-Indikatoren ermittelt und einem Benutzer angezeigt werden.

Dies kann beispielsweise für unterschiedliche Betriebszustände der technischen Anlage wiederholt werden, um z. B. einen passenden Aktualisierungszeitpunkt zu ermitteln.

Gemäß einem weiteren Aspekt betrifft die Erfindung einen Aktualisierungsserver zum Steuern einer Softwareaktualisierung einer technischen Anlage aufweisend:
- ein Empfangsmodul, wobei
   - das Empfangsmodul dazu eingerichtet ist, eine Aktualisierungskonfiguration und/oder eine Softwareaktualisierung zu empfangen,
   - die Aktualisierungskonfiguration und/oder die Softwareaktualisierung vorzugsweise von einer Konfigurationsvorrichtung nach einem der Ansprüche 1 - 5 empfangen wird;
- ein Aktualisierungssteuersystem, wobei
   - das Aktualisierungssteuersystem dazu eingerichtet ist, eine Softwareaktualisierung für eine technische Anlage und/oder einem Element oder für mehreren Elemente der technischen Anlage anhand der Aktualisierungskonfiguration durchzuführen,
   - die Aktualisierungskonfiguration beispielsweise Betriebsvorgaben umfasst, die während und/oder nach der Durchführung der Softwareaktualisierung durch die technische Anlage und/oder von den entsprechenden Elementen der technischen Anlage einzuhalten sind.

Bei weiteren Ausführungsformen des Aktualisierungsservers ist die Aktualisierungskonfiguration eine entsprechende Aktualisierungskonfiguration der erfindungsgemäßen Konfigurationsvorrichtung.

Bei weiteren Ausführungsformen des Aktualisierungsservers umfasst der Aktualisierungsserver ein Überwachungsmodul, wobei
- das Überwachungsmodul dazu eingerichtet ist, während der Durchführung der Softwareaktualisierung Betriebsparameter der technischen Anlage und/oder von den entsprechenden Elementen der technischen Anlage zu erfassen,
- das Überwachungsmodul dazu eingerichtet ist, ein Prüfergebnis anhand der Betriebsvorgaben und der Betriebsparameter zu ermitteln,
- eine weitere Durchführung der Softwareaktualisierung anhand des Prüfergebnisses gesteuert wird,
- beispielsweise bei einem Überschreiten der Betriebsvorgaben durch die Betriebsparameter ein Alarm ausgelöst wird und/oder die Softwareaktualisierung abgebrochen wird,
- beispielsweise bei einem Einhalten der Betriebsvorgaben durch die Betriebsparameter die Softwareaktualisierung fortgeführt wird.

Bei weiteren Ausführungsformen des Aktualisierungsservers umfasst der Aktualisierungsserver einen Schlüsselspeicher für kryptographische Schlüssel und/oder Zugangsdaten und/oder Lizenzdaten, wobei
- der Aktualisierungsserver beispielsweise das entsprechende Schlüsselmaterial und/oder die entsprechenden Zugangsdaten und/oder die entsprechenden Lizenzdaten für die Softwareaktualisierung der technischen Anlage oder eines entsprechenden Elementes der technischen Anlage nutzt,
- der Aktualisierungsserver beispielsweise das Schlüsselmaterial verwendet, um einen aufgezeichneten Verlauf der Softwareaktualisierung digital zu signieren,
- vorzugsweise das Schlüsselmaterial und/oder die Zugangsdaten und/oder die Lizenzdaten spezifisch entsprechenden Elementen der technischen Anlage zugeordnet sind und/oder spezifisch entsprechenden Teilen der Softwareaktualisierung von entsprechenden Elementen zugeordnet sind.

Beim digitalen Signieren können beispielsweise ein Datum und eine Uhrzeit (z. B. ein aktuelles/gerade erfasstes Datum/Uhrzeit) berücksichtigt werden.

Das Schlüsselmaterial (z. B. kryptographische Schlüssel, digitale Zertifikate) kann z. B. auch verwendet werden, um sicher mit den Instanzen (z. B. unterschiedliche Update-Server der entsprechenden Hersteller/Lieferanten oder eine Cloudanwendung) zu kommunizieren, die die entsprechenden Softwareaktualisierung bereitstellen.

Bei weiteren Ausführungsformen des Aktualisierungsservers umfasst die Softwareaktualisierung ein oder mehrere Teilpakete für die Softwareaktualisierung, wobei
- beispielsweise entsprechende Teilpakete spezifisch für die Softwareaktualisierung von entsprechenden Elementen der technischen Anlage zugeordnet sind,
- beispielsweise die entsprechenden Teilpakete von verschiedenen Quellen bereitgestellt werden,
- beispielsweise die Teilpakete in der Softwareaktualisierung durch den Aktualisierungsserver und/oder die Konfigurationsvorrichtung gebündelt gespeichert werden.

Bei den Quellen kann es sich beispielsweise um Update-Server z. B. von verschiedenen Herstellern und/oder Lieferanten der entsprechenden Elemente der technischen Anlage handeln

Bei weiteren Ausführungsformen des Aktualisierungsservers umfasst der Aktualisierungsserver ein Interface (z. B. ein Webinterface) zur sicheren Kommunikation mit den entsprechenden Elementen der technischen Anlage.

Gemäß einem weiteren Aspekt betrifft die Erfindung ein computerimplementiertes Verfahren zum Ermitteln einer Aktualisierungskonfiguration für eine Softwareaktualisierung für eine technische Anlage mit folgenden Verfahrensschritten:
- Erfassen von Betriebsparametern eines Produktionsprozesses einer technischen Anlage, wobei
   - die Betriebsparameter Konfigurationsparameter der technischen Anlage umfassen,
   - beispielsweise die Betriebsparameter des Produktionsprozesses der technischen Anlage durch ein Bewertungsmodul bewertet werden,
   - beispielsweise die Betriebsparameter die Bewertung des Bewertungsmodules umfassen;
- Laden einer Softwareaktualisierung für ein oder mehrere Elemente der technischen Anlage;
- Ermitteln einer Aktualisierungskonfiguration anhand der Betriebsparameter und der Softwareaktualisierungen für die Softwareaktualisierungen der ein oder mehrere Elemente der technischen Anlage, wobei die Aktualisierungskonfiguration beispielsweise anhand der Betriebsparameter und der Softwareaktualisierungen der ein oder mehrere Elemente der technischen Anlage optimiert wird;
- Übermitteln der Aktualisierungskonfiguration und/oder die Softwareaktualisierung an einen Aktualisierungsserver, wobei
   ∘ der Aktualisierungsserver die Softwareaktualisierung der ein oder mehrere Elemente der technischen Anlage anhand der Aktualisierungskonfiguration steuert und/oder überwacht und/oder aufzeichnet.

Bei weiteren Ausführungsformen des Verfahrens umfasst das Verfahren weitere Verfahrensschritte oder Merkmale, um die funktionalen Merkmale der Konfigurationsvorrichtung oder um weitere Merkmale der Konfigurationsvorrichtung bzw. deren Ausführungsformen zu realisieren.

Gemäß einem weiteren Aspekt betrifft die Erfindung ein computerimplementiertes Verfahren zum Steuern einer Softwareaktualisierung mit folgenden Verfahrensschritten:
- Empfangen einer Aktualisierungskonfiguration und/oder einer Softwareaktualisierung, wobei
   - die Aktualisierungskonfiguration und/oder die Softwareaktualisierung vorzugsweise von einer Konfigurationsvorrichtung nach einem der Ansprüche 1 - 5 empfangen wird;
- Durchführen einer Softwareaktualisierung einer technischen Anlage und/oder einem oder mehreren Elementen der technischen Anlage anhand der Aktualisierungskonfiguration, wobei
   - die Aktualisierungskonfiguration beispielsweise Betriebsvorgaben umfasst, die während und/oder nach der Durchführung der Softwareaktualisierung durch die technische Anlage und/oder von den entsprechenden Elementen der technischen Anlage einzuhalten sind.

Bei weiteren Ausführungsformen des Verfahrens umfasst das Verfahren weitere Verfahrensschritte oder Merkmale, um die funktionalen Merkmale des Aktualisierungsservers oder um weitere Merkmale des Aktualisierungsservers bzw. dessen Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts das entsprechende erfindungsgemäße Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass der genannte erfindungsgemäße Aktualisierungsserver und/oder die Konfigurationsvorrichtung erstellt wird.

Darüber hinaus wird eine Bereitstellungsvorrichtung zum Speichern und/oder Bereitstellen des Computerprogrammprodukts beansprucht, wobei
- beispielsweise das Computerprogrammprodukt kryptographisch geschützt ist,
- beispielsweise der kryptographische Schutz eine digitale Signatur und/oder eine Verschlüsselung des Computerprogramproduktes ist und/oder eine kryptographische Prüfsumme ist,
- beispielsweise der kryptographische Schutz mittels des Schlüsselmaterials des Aktualisierungsservers überprüft und/oder entfernt werden kann.

Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es den erfindungsgemäßen Aktualisierungsserver und/oder die Konfigurationsvorrichtung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

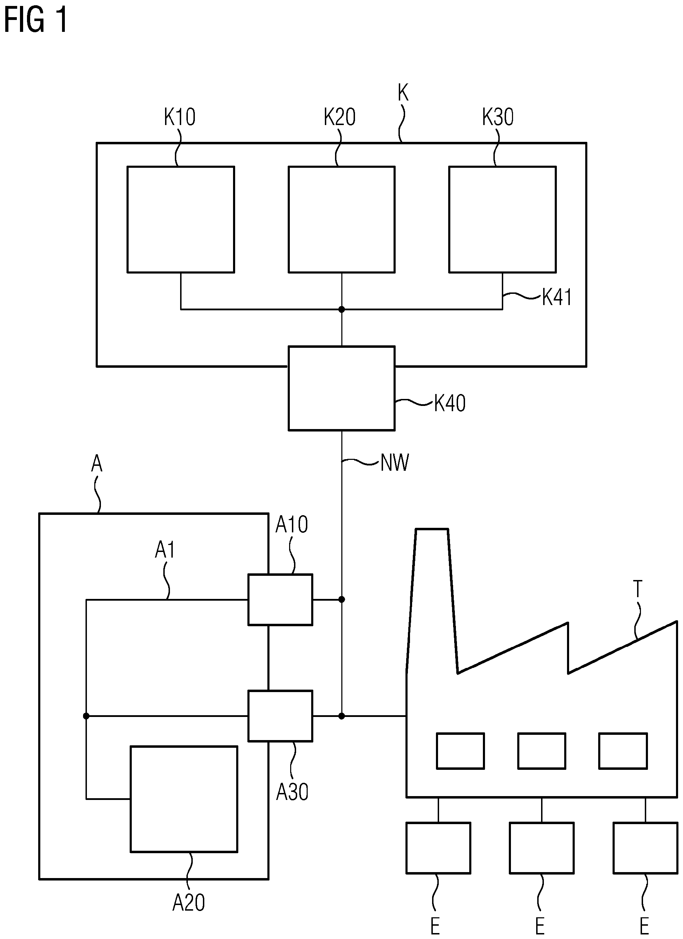

Fig. 1 zeigt ein System, das eine Konfigurationsvorrichtung K, einen Aktualisierungsserver A und eine technische Anlage T umfasst, die über ein Kommunikationsnetzwerk NW kommunikativ miteinander verbunden sind. Die Konfigurationsvorrichtung K und der Aktualisierungsserver A können in Varianten als ein Aktualisierungssystem ausgebildet sein, das die Konfigurationsvorrichtung K und den Aktualisierungsserver A umfasst.

Die technische Anlage T (z. B. eine Fertigungsanlage, eine Fabrik oder eine Fertigungsstraße in einer Fabrik) umfasst dabei ein oder mehrere Elemente E (z. B. Hardware, wie Geräte, und/oder Software).

Die Konfigurationsvorrichtung K ist zum Ermitteln einer Aktualisierungskonfiguration für eine Softwareaktualisierung für die technische Anlage T eingerichtet.

Die Konfigurationsvorrichtung K umfasst ein Erfassungsmodul K10, ein optionales Bewertungsmodul, ein Lademodul K20, ein Ermittlungsmodul K30 und ein Bereitstellungsmodul K40, die kommunikativ über einen Bus K1 miteinander kommunikativ verbunden sind. Zudem kann die Konfigurationsvorrichtung K einen Prozessor umfassen.

Das Erfassungsmodul K10 ist dazu eingerichtet, Betriebsparameter eines Produktionsprozesses einer technischen Anlage T zu erfassen, wobei die Betriebsparameter Konfigurationsparameter des einen Elementes E oder der mehreren Elemente E der technischen Anlage T oder der technischen Anlage T selbst umfassen.

Das Bewertungsmodul ist dazu eingerichtet, beispielsweise die Betriebsparameter des Produktionsprozesses der technischen Anlage T zu bewerten, wobei beispielsweise die Betriebsparameter die Bewertung des Bewertungsmodules umfassen. Hierzu wird das Ergebnis als Datensatz abgespeichert und an die bereits erfassten Betriebsparameter angehängt oder in diesen gespeichert.

Das Lademodul K20 ist dazu eingerichtet, Softwareaktualisierungen (z. B. Firmware, Software) für das eine oder die mehreren Elemente E (z. B. Geräte der Anlage, Softwarekomponenten auf den Anlagengeräten, Firmware für Geräte) der technischen Anlage T zu laden.

Das Ermittlungsmodul K30 ist dazu eingerichtet, anhand der Betriebsparameter und der Softwareaktualisierungen eine Aktualisierungskonfiguration für die Softwareaktualisierungen der ein oder mehreren Elemente der technischen Anlage zu ermitteln, wobei das Ermittlungsmodul K30 beispielsweise dazu eingerichtet ist, die Aktualisierungskonfiguration anhand der Betriebsparameter und der Softwareaktualisierungen der ein oder mehreren Elemente E der technischen Anlage T zu optimieren.

Das Bereitstellungsmodul K40 ist dazu eingerichtet, die Aktualisierungskonfiguration und/oder die Softwareaktualisierungen einem Aktualisierungsserver zu übermitteln, wobei der Aktualisierungsserver die Softwareaktualisierung der ein oder mehrere Elemente der technischen Anlage anhand der Aktualisierungskonfiguration steuert und/oder überwacht und/oder aufzeichnet. Das Bereitstellungsmodul kann z. B. auch vorgegebene Server, z. B von Herstellern von Automatisierungskomponenten, nach Softwareaktualisierungen (Patches) absucht und diese von dort bezieht, wenn diese z. B. noch nicht im Bereitstellungsmodul vorliegen.

Der Aktualisierungsserver steuert damit beispielsweise nicht nur, sondern überwacht auch und greift notfalls ein, falls bei der Durchführung der Softwareaktualisierung eine Abweichung von der Aktualisierungskonfiguration festgestellt wird. Der Aktualisierungsserver zeichnet z. B. auch auf, was er gemacht hat, und ermöglicht damit eine spätere Nachvollziehbarkeit von Patch-Ständen.

Der Aktualisierungsserver A ist zum Steuern einer Softwareaktualisierung der technischen Anlage T eingerichtet.

Der Aktualisierungsserver A umfasst ein Empfangsmodul A10, ein Aktualisierungssteuersystem A20 und ein Sendemodul A30, die über den Bus A1 kommunikativ miteinander verbunden sind. Zudem kann der Aktualisierungsserver A einen Prozessor umfassen.

Das Empfangsmodul A10 ist dazu eingerichtet eine Aktualisierungskonfiguration und/oder eine Softwareaktualisierung zu empfangen, wobei die Aktualisierungskonfiguration und/oder die Softwareaktualisierung vorzugsweise von der Konfigurationsvorrichtung K empfangen wird.

Die Aktualisierungskonfiguration und/oder die Softwareaktualisierung können z. B. auch von außerhalb der Anlage empfangen werden. Dies erfolgt vorzugsweise geschützt von der eigentlichen technischen Anlage. Diese können dann z. B. später auf der technischen Anlage eingespielt bzw. installiert oder im Rahmen einer Softwareaktualisierung der Anlage ausgeführt werden.

Beispielsweise kann ein Hersteller mit verschiedenen technischen Anlagen (z. B. Produktionsanlagen), der in einer Anlage die Softwareaktualisierung durchführt, dann die Ergebnisse auf andere vergleichbare technische Anlagen übertragen. Hierzu kann er z. B. die entsprechende Aktualisierungskonfiguration oder Aufzeichnungen der Aktualisierungskonfiguration bzw. der Durchführung der Aktualisierungskonfiguration verwenden.

Das Aktualisierungssteuersystem A20 ist dazu eingerichtet, eine Softwareaktualisierung für die technische Anlage T und/oder einem Element E oder für mehrere Elemente E der technischen Anlage T anhand der Aktualisierungskonfiguration durchzuführen, wobei die Aktualisierungskonfiguration beispielsweise Betriebsvorgaben umfasst, die während und/oder nach der Durchführung der Softwareaktualisierung durch die technische Anlage und/oder von den entsprechenden Elementen der technischen Anlage einzuhalten sind.

Das Sendemodul A30 ist dazu eingerichtet, mit der technischen Anlage zu kommunizieren und wird ggf. vom Aktualisierungssteuersystem A20 verwendet, um die Softwareaktualisierung durchzuführen.

Die Erfindung umfasst und verknüpft insbesondere zwei Themen. Zum einen wird eine genaue Aktualisierungskonfiguration (z. B. auch als Patch Plan bezeichnet) erstellt. Zusätzlich wird ein Aktualisierungsserver A (z. B. auch als Patch Server bezeichnet) zur Verfügung gestellt, der an die technische Anlage T (z. B. eine industrielle Anlage) angebunden werden kann und das Durchführen der geplanten Softwareaktualisierung (z. B. auch als (geplanter) Patch oder geplantes Patchen) gemäß der Aktualisierungskonfiguration unterstützt. Der Aktualisierungsserver A begleitet und unterstützt die Vorbereitung, Durchführung und Aufzeichnung der Softwareaktualisierung (z. B, Patch Vorgänge) der technischen Anlage T.

Die Verknüpfung von Aktualisierungskonfiguration und Aktualisierungsserver A führt zu einem intelligenten Softwareaktualisierungsprozess bzw. Smart Patch Prozess, der z. B. technisch und organisatorisch zu einer deutlichen Verbesserung gegenüber heute eingesetzten Verfahren zum Patchen von industriellen Anlagen führt.

Der Aktualisierungskonfiguration dient z. B. dazu, vor dem Einspielen von Softwareaktualisierungen (Patches) ein möglichst genaues Abbild der für die Patches notwendigen Vorgänge und Maßnahmen zu erstellen.

Ziel ist es, z. B. Auswirkungen auf den Produktionsprozess vor dem Einspielen von Patches zu ermitteln und das Patchen soweit wie möglich zu optimieren. Ein weiteres Ziel ist beispielsweise, möglichst minimale Ausfallzeiten durch Patches zu haben. Mit dem Patch Plan wird der Blick entweder auf die gesamte Anlage gerichtet oder gezielt auf Elemente E der technischen Anlage T, wobei die Elemente E einzelne Komponenten der technischen Anlage T oder spezifische, kritische Anlagenteile der technischen Anlage T sein können, die aus mehreren Komponenten bestehen. Ein weiteres Ziel ist beispielsweise, dass bei dem Einspielen der Aktualisierungskonfiguration, d.h. auch wenn im laufenden Betrieb Patches eingespielt werden, die Key-Performance-Indikatoren des Produktionsprozesses Mindestwerte einhalten.

Hinsichtlich der Aktualisierungskonfiguration können folgende Daten der technischen Anlage T berücksichtigt werden:
- beim Ermitteln der Aktualisierungskonfiguration wird eine Aktualisierungsdauer von entsprechenden Elementen der technischen Anlage berücksichtigt, und/oder
- beim Ermitteln der Aktualisierungskonfiguration wird eine Rollbackdauer auf einen Zustand vor der Softwareaktualisierung der entsprechenden Elemente der technischen Anlage berücksichtigt, und/oder
- beim Ermitteln der Aktualisierungskonfiguration wird überprüft, ob ein Neustart der entsprechenden Elemente der technischen Anlage notwendig ist oder ob eine Live-Aktualisierung der technischen Anlage möglich ist, und/oder
- beim Ermitteln der Aktualisierungskonfiguration wird ermittelt, welche Auswirkungen die Softwareaktualisierung auf die technische Anlage und/oder entsprechende Elemente der technischen Anlage während der Softwareaktualisierung und/oder nach der Softwareaktualisierung hat, und/oder
- beim Ermitteln der Aktualisierungskonfiguration wird eine erwartete Temperaturerhöhung von einem oder mehreren Prozessoren der technischen Anlage und/oder von entsprechenden Elementen der technischen Anlage berücksichtigt, und/oder
- beim Ermitteln der Aktualisierungskonfiguration wird der erforderliche Speicherplatz und die erforderliche Prozessorleistung für die Softwareaktualisierung berücksichtigt, und/oder
- beim Ermitteln der Aktualisierungskonfiguration wird eine Softwarekompatibilität mit der bestehenden Software und der Softwareaktualisierung berücksichtigt, und/oder
- beim Ermitteln der Aktualisierungskonfiguration werden Lizenzanforderungen berücksichtigt, und/oder
- beim Ermitteln der Aktualisierungskonfiguration wird eine Auswirkung auf die technische Anlage bei einer Softwareaktualisierung von mehreren Elementen der technischen Anlage berücksichtigt, und/oder
- beim Ermitteln der Aktualisierungskonfiguration wird eine Kompatibilität zwischen aktualisierten und unaktualisierten Elementen der technischen Anlage berücksichtigt, und/oder
- beim Ermitteln der Aktualisierungskonfiguration wird berücksichtigt, ob die Softwareaktualisierung automatisch durchführbar ist oder ein manuelles Eingreifen erforderlich ist, und/oder
- beim Ermitteln der Aktualisierungskonfiguration werden notwendige Zugangsrechte (normaler Servicetechniker, Bediener, Spezialsupport durch Hersteller) berücksichtigt, und/oder
- beim Ermitteln der Aktualisierungskonfiguration wird berücksichtigt, ob eine automatisierte Prüfung von manuell durchgeführten Schritten durchführbar ist, und/oder
- beim Ermitteln der Aktualisierungskonfiguration wird berücksichtigt, ob die Softwareaktualisierung für ein entsprechendes Element angibt, wie dieses zu installieren ist (z. B. ist eine lokale Installation möglich oder kann dies auch remote, beispielsweise über eine Fernwartungssoftware, erfolgen), und/oder
- beim Ermitteln der Aktualisierungskonfiguration können Erfahrungswerte aus früher durchgeführten Aktualisierungen einfließen und in Form von Verbesserungen umgesetzt werden.

Die Durchführung der Softwareaktualisierung kann z. B. mittels der Aktualisierungskonfiguration vorab simuliert werden, um diese Informationen zu ermitteln.

Dadurch kann z. B. ein Service-Techniker entscheiden, welche Effekte auf die technische Anlage und ihre Elemente (z. B. eine Produktionsanlage und deren Komponenten) bei der Durchführung der Softwareaktualisierung gemäß dieser Aktualisierungskonfiguration zu erwarten sind.

Die Simulation kann dabei z. B. neben dem Einspielen der Softwareaktualisierung auch den eigentlichen Produktionsprozess simulieren. Dies ermöglicht beispielsweise, die Auswirkungen auf die Produktion und auf die produzierten Güter beim Durchführen des Patches gemäß dem Patch-Plan zu ermitteln.

Die Softwareaktualisierung wird vorzugsweise vom Aktualisierungsserver durchgeführt. Er führt den Patch-Vorgang gemäß der vorab definierten und (simulierten) Aktualisierungskonfiguration durch. Er kann beispielsweise die Effekte bei der tatsächlichen Durchführung mit den vorab in der Simulation ermittelten Effekten vergleichen. Hierzu wird vorzugsweise ein Überwachungsmodul verwendet.

Bei einer Abweichung kann z. B. ein Alarm generiert werden. Somit kann frühzeitig reagiert werden, wenn der Patch-Vorgang in Realität nicht so wie gemäß der Simulation zu erwarten wäre, in der Realität durchgeführt werden kann.

Das Überwachungsmodul ist dazu eingerichtet, während der Durchführung der Softwareaktualisierung Betriebsparameter der technischen Anlage und/oder von den entsprechenden Elementen der technischen Anlage zu erfassen, wobei das Überwachungsmodul dazu eingerichtet ist, ein Prüfergebnis anhand der Betriebsvorgaben und der Betriebsparameter zu ermitteln, und wobei eine weitere Durchführung der Softwareaktualisierung anhand des Prüfergebnisses gesteuert wird.

Beispielsweise wird bei einem Überschreiten der Betriebsvorgaben durch die Betriebsparameter ein Alarm ausgelöst und/oder die Softwareaktualisierung wird abgebrochen, wobei beispielsweise bei einem Einhalten der Betriebsvorgaben durch die Betriebsparameter die Softwareaktualisierung fortgeführt wird.

Der Aktualisierungsserver kann zusätzlich noch ein oder mehrere der folgenden Komponenten umfassen:
- Prozessoren,
- allgemeine Speicherbereiche,
- ein Sicherheitsmodul zur Ablage von geheimen Schlüsseln und zur Durchführung von sensitiven Operationen. Der Patch Server hat Schnittstellen zur Ein- und Ausgabe und zur Kommunikation mit den Komponenten der Anlage.

Zum Speichern von sensitiven Daten (z. B. geheime Schlüssel, kryptographische Schlüssel und/oder Zugangsdaten und/oder Lizenzdaten), umfasst der Aktualisierungsserver z. B. einen Schlüsselspeicher, wobei der Aktualisierungsserver beispielsweise das entsprechende Schlüsselmaterial und/oder die entsprechenden Zugangsdaten und/oder die entsprechenden Lizenzdaten für die Softwareaktualisierung der technischen Anlage oder eines entsprechenden Elementes der technischen Anlage nutzt.

Der Aktualisierungsserver verwendet beispielsweise das Schlüsselmaterial, um einen aufgezeichneten Verlauf der Softwareaktualisierung digital zu signieren, wobei vorzugsweise das Schlüsselmaterial und/oder die Zugangsdaten und/oder die Lizenzdaten spezifisch entsprechenden Elementen der technischen Anlage zugeordnet sind und/oder spezifisch entsprechenden Teilen der Softwareaktualisierung von entsprechenden Elementen zugeordnet sind.

Der Aktualisierungsserver umfasst beispielsweise ein Web Interface, mit dem eine gesicherte und integre Kommunikation zu Gerätelieferanten oder zu einem zentralen Unternehmensserver möglich ist, der z. B. mehrere Unternehmens-Standorte versorgt.

Über eine Schnittstelle (z. B. das Webinterface) zu einem zentralen Unternehmensserver können z. B. die Aktualisierungskonfiguration und/oder die Softwareaktualisierung und/oder Erfahrung (z. B. Prüfergebnisse des Überwachungsmoduls) hinsichtlich der Durchführung der Softwareaktualisierung über verteilte Standorte hinweg ausgetauscht werden. Damit können z. B. bei Unternehmen mit vielen Standorten, die Erfahrungen zusammenfließen und für Verbesserungen und Aktualisierungen genutzt werden.

Als Basis stehen dem Aktualisierungsserver z. B. alle Informationen der Aktualisierungskonfiguration zur Verfügung. Der Aktualisierungsserver kann mehrere Quellen für Softwareaktualisierungen auswerten (z.B. Komponenten von Lieferanten, Maschinenbauer). Ein Maschinenbauer kann zum Beispiel seine Softwareaktualisierungen in den Aktualisierungsserver lokal einspielen. Die Lizenz auf dem Aktualisierungsserver gibt z. B. an, welche Softwareaktualisierungen der Aktualisierungsserver beziehen darf. Der Anbieter der Softwareaktualisierung muss dann z. B. nicht selbst den Know-How-Schutz realisieren. Der Aktualisierungsserver kann z. B. auch Regeln verwalten, welche Softwareaktualisierungen (Patches) wie und wann eingespielt werden dürfen, insbesondere welche Aktualisierungen automatisch erfolgen dürfen und welche nur mit Zustimmung eines Administrators / Service-Technikers.

Der Aktualisierungsserver kann überwachen, welche Patches wann durchgeführt wurden und welche Patches noch ausstehen. Er kann regeln, ob ein Rücksetzen auf eine ältere FW Version erlaubt ist oder nicht. Damit kann zum Beispiel verhindert werden, dass ein Angreifer durch Rücksetzen auf eine ältere Komponentenversion alte Schwachstellen für Angriffe nutzen kann.

Der Aktualisierungsserver kann z. B. das sichere Dokumentieren der durchgeführten Patches unterstützen. Mit einem privaten Signaturschlüssel, der beispielsweise auf sichere Weise im Sicherheitsmodul abgelegt ist, kann z. B. ein signierter Wert aus den mit einem Hashverfahren zu einem Hashwert komprimierten Patch-Aufzeichnungen erzeugt werden. Beispielsweise indem für die Daten der Aufzeichnung der Softwareaktualisierung bzw. Patch-Aufzeichnung ein entsprechender Hashwert oder ein entsprechender signierter Hashwert erzeugt und/oder gespeichert wird.

Der signierte Hashwert kann z. B. außerhalb des Sicherheitsmoduls aufbewahrt werden und z. B. später oder im Bedarfsfall mit Hilfe eines zum privaten Signaturschlüssel passenden öffentlichen Schlüssels überprüft werden.

Somit können zum Beispiel in Anlagen, in denen Dokumentationen zwingend vorgeschrieben sind (zum Beispiel FDA Anforderungen im Pharmabereich) Nachweise über eingespielte Patches, inklusive Datum und Uhrzeit, geführt werden.

Die so gewonnenen integren Daten über den Patch Zustand einzelner Geräte können z. B. als Eingabewerte für ein Asset Management System einer Anlage verwendet werden. Ein Anlagen-Betreiber kann damit auf Knopfdruck feststellen, wie der Patch Zustand seiner Anlage ist und an welchen Stellen im Moment oder zu welchem zukünftigen Zeitpunkt Handlungsbedarf besteht.

Der Aktualisierungsserver (z. B. Patch-Server) kann z. B. durch die Verbindung mit entsprechenden einzelnen Elementen (z. B. Komponenten) auch so genutzt werden, dass sich ein Element/eine Komponente direkt beim Aktualisierungsserver meldet und diesem mitteilt, wann z. B. der beste Zeitpunkt zum Einspielen einer Softwareaktualisierung ist. Bei vorher als unkritisch identifizierten Softwareaktualisierungen kann dann z. B. der Patch direkt über den Patch Server initiiert und auf dem Element eingespielt werden.

Bei Elementen, die heute z. B. mit Speicherkarten manuell aktualisiert werden, kann der Aktualisierungsserver eingebunden werden, in dem er z. B. das manuelle Aktualisieren freischalten muss, das heißt beispielsweise, das manuelle Einstecken der Speicherkarte autorisieren muss. Falls die Autorisierung durch den Aktualisierungsserver nicht vorliegt, wird das Patchen mit der neuen Speicherkarte verweigert.

Der Aktualisierungsserver bietet insbesondere in Anlagen mit vielen gleichartigen Komponenten, die heute oft einzeln, manuell mit Patches bedient werden müssen (Beispiel: großer Solarpark), erhebliche Vorteile. Wenn eine derartige Anlage mit dem Aktualisierungsserver die Softwareaktualisierungen (Patches) automatisch einspielen kann, werden signifikante Kosten und Zeit eingespart.

Die im Aktualisierungsserver hinterlegte Aktualisierungskonfiguration kann z. B. laufend aktualisiert werden. Es können auf diese Weise Erfahrungswerte aus durchgeführten Softwareaktualisierungsvorgängen in Form von verbesserten Aktualisierungskonfigurationen eingetragen werden.

Durch die Aktualisierungskonfiguration und den Aktualisierungsserver wird sichergestellt, dass es beim Aufspielen von Softwareaktualisierungen (z. B. auch Patches genannt) auf eine technische Anlage nur zu minimalen Ausfallzeiten kommt.

Es wird zum Beispiel ein paralleles Einspielen von Patches möglich. Es können z. B. Handlungsempfehlungen gegeben werden, was genau zu tun ist. Es kann z. B. in bestimmten Fällen eine Vor-Ort-Bestätigung eingefordert werden, die im Patch Server aufgezeichnet und damit dokumentiert wird.

Bei Patches mit niedrigem Risiko kann z. B. eine volle Automatisierung der Patches angestoßen werden. Damit kann z. B. eine Art Self-Patching erreicht werden und die Anlage ist immer auf dem neuesten Stand. Der Patch Server kann z. B. eine Warnung abgeben, wenn er nicht in der Lage ist, das Patchen durchzuführen.

Der Patch Plan kann z. B. unter Einbeziehung von Service Technikern durchgeführt werden. Diese können z. B. den gesamten Prozess begleiten, vollkommen selbständig durchführen oder bei bestimmten Schritten einbezogen werden. So könnten zum Beispiel kritische Patches zwingend durch Service Techniker begleitet werden. Das könnte z. B. eine spezielle Auflage in der Aktualisierungskonfiguration (z. B. auch als Patch Plan bezeichnet) sein.

Der Aktualisierungsserver könnte z. B. die Einhaltung dieser Regel überprüfen und dokumentieren. Dies erfolgt z. B. mit dem Überwachungsmodul.

Die Aktualisierungskonfiguration und der Aktualisierungsserver können z. B. über eine App in der Cloud dem Anlagen-Betreiber als Komfortanwendung zur Verfügung gestellt werden. Der Aktualisierungsserver steht dabei z. B. in der Kunden-Anlage und über ein Edge Gerät in der Anlage wird die sichere, verschlüsselte und integre Kommunikation in die Cloud gewährleistet.

Mit Hilfe der App kann z. B. komfortabel der aktuelle Patch Status (Software-Aktualisierungsstatus) abgefragt werden oder ein Gerät kann melden, dass es bereit für das Einspielen eines neuen Patches ist. Über die App kann die Aktualisierungskonfiguration eingesehen und aktualisiert werden. Damit würde die vorgeschlagene Erfindung auch in Cloud- und Edge-basierte Szenarien zum Beispiel in industrielle MindSphere Umgebungen komfortabel eingebunden werden können.

Mit der Aktualisierungskonfiguration und dem Aktualisierungsserver können z. B. erhebliche Kosten gespart werden, weil die Anlage seltener oder überhaupt nicht ausfällt und die Zeiten für einen eingeschränkten Betrieb verkürzt werden können. Beispielsweise kann auch ein Absinken der Qualität der produzierten Waren verhindert oder der Zeitraum für die Softwareaktualisierung verkürzt werden.

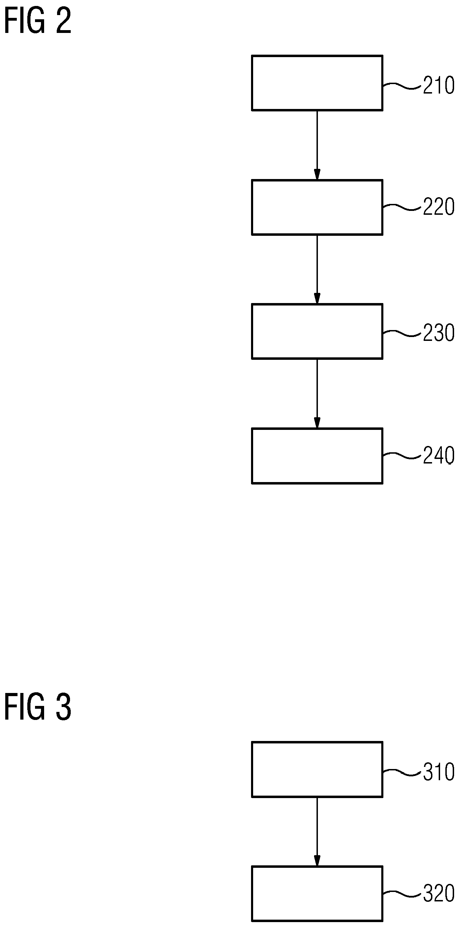

Die Fig. 2 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein Verfahren zum rechnergestützten oder computerimplementierten Verfahren zum Ermitteln einer Aktualisierungskonfiguration für eine Softwareaktualisierung für eine technische Anlage gezeigt.

Das Verfahren umfasst einen Verfahrensschritt 210 zum Erfassen von Betriebsparametern eines Produktionsprozesses einer technischen Anlage, wobei
- die Betriebsparameter Konfigurationsparameter der technischen Anlage umfassen,
- beispielsweise die Betriebsparameter des Produktionsprozesses der technischen Anlage durch ein Bewertungsmodul bewertet werden,
- beispielsweise die Betriebsparameter die Bewertung des Bewertungsmodules umfassen.

Das Verfahren umfasst einen Verfahrensschritt 220 zum Laden einer Softwareaktualisierung für ein oder mehrere Elemente der technischen Anlage.

Das Verfahren umfasst einen Verfahrensschritt 230 zum Ermitteln einer Aktualisierungskonfiguration anhand der Betriebsparameter und der Softwareaktualisierungen für die Softwareaktualisierungen der ein oder mehrere Elemente der technischen Anlage, wobei die Aktualisierungskonfiguration beispielsweise anhand der Betriebsparameter und der Softwareaktualisierungen der ein oder mehreren Elemente der technischen Anlage optimiert wird.

Das Verfahren umfasst einen Verfahrensschritt 240 zum Übermitteln der Aktualisierungskonfiguration und/oder die Softwareaktualisierung an einen Aktualisierungsserver, wobei der Aktualisierungsserver die Softwareaktualisierung der ein oder mehrere Elemente der technischen Anlage anhand der Aktualisierungskonfiguration steuert und/oder überwacht und/oder aufzeichnet.

Die Fig. 3 zeigt ein weiteres Ausführungsbeispiel der Erfindung, das als Ablaufdiagramm für ein Verfahren dargestellt ist.

Das Verfahren ist vorzugsweise rechnergestützt realisiert.

Im Einzelnen wird in diesem Ausführungsbeispiel ein Verfahren zum rechnergestützten oder computerimplementierten Steuern einer Softwareaktualisierung gezeigt.

Das Verfahren umfasst einen Verfahrensschritt 310 zum Empfangen einer Aktualisierungskonfiguration und/oder einer Softwareaktualisierung, wobei die Aktualisierungskonfiguration und/oder die Softwareaktualisierung vorzugsweise von einer Konfigurationsvorrichtung empfangen wird.

Das Verfahren umfasst einen Verfahrensschritt 320 zum Durchführen einer Softwareaktualisierung einer technischen Anlage und/oder einem oder mehreren Elemente der technischen Anlage anhand der Aktualisierungskonfiguration, wobei die Aktualisierungskonfiguration beispielsweise Betriebsvorgaben umfasst, die während und/oder nach der Durchführung der Softwareaktualisierung durch die technische Anlage und/oder von den entsprechenden Elementen der technischen Anlage einzuhalten sind.

Mittels der Erfindung kann der Prozess einer Softwareaktualisierung für industrielle technische Anlagen verbessert werden.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Konfigurationsvorrichtung zum Ermitteln einer Aktualisierungskonfiguration für eine Softwareaktualisierung für eine technische Anlage aufweisend:
- ein Erfassungsmodul, wobei
∘ das Erfassungsmodul dazu eingerichtet ist, Betriebsparameter eines Produktionsprozesses einer technischen Anlage zu erfassen,
∘ die Betriebsparameter Konfigurationsparameter der technischen Anlage umfassen,
∘ beispielsweise die Betriebsparameter des Produktionsprozesses der technischen Anlage durch ein Bewertungsmodul bewertet werden,
∘ beispielsweise die Betriebsparameter die Bewertung des Bewertungsmodules umfassen;
- ein Lademodul, wobei das Lademodul dazu eingerichtet ist, Softwareaktualisierungen für ein oder mehrere Elemente der technischen Anlage zu laden;
- ein Ermittlungsmodul, wobei
∘ das Ermittlungsmodul dazu eingerichtet ist, anhand der Betriebsparameter und der Softwareaktualisierungen eine Aktualisierungskonfiguration für die Softwareaktualisierungen der ein oder mehrere Elemente der technischen Anlage zu ermitteln,
∘ das Ermittlungsmodul beispielsweise dazu eingerichtet ist, die Aktualisierungskonfiguration anhand der Betriebsparameter und der Softwareaktualisierungen der ein oder mehrere Elemente der technischen Anlage zu optimieren;
- ein Bereitstellungsmodul, wobei das Bereitstellungsmodul dazu eingerichtet ist, die Aktualisierungskonfiguration und/oder die Softwareaktualisierungen einem Aktualisierungsserver zu übermitteln, wobei
∘ der Aktualisierungsserver die Softwareaktualisierung der ein oder mehrere Elemente der technischen Anlage anhand der Aktualisierungskonfiguration steuert und/oder überwacht und/oder aufzeichnet.

2. Konfigurationsvorrichtung nach Anspruch 1, wobei
- beim Ermitteln der Aktualisierungskonfiguration Betriebsvorgaben ermittelt werden
- die Betriebsvorgaben Vorgaben sind, die während und/oder nach der Durchführung der Softwareaktualisierung durch die technische Anlage und/oder von entsprechenden Elementen der technischen Anlage einzuhalten sind.

3. Konfigurationsvorrichtung nach einem der vorhergehenden Ansprüche, wobei
- beim Ermitteln der Aktualisierungskonfiguration eine Aktualisierungsdauer von entsprechenden Elementen der technischen Anlage berücksichtigt wird, und/oder
- beim Ermitteln der Aktualisierungskonfiguration eine Rollbackdauer auf einen Zustand vor der Softwareaktualisierung der entsprechenden Elemente der technischen Anlage berücksichtigt wird, und/oder
- beim Ermitteln der Aktualisierungskonfiguration überprüft wird, ob ein Neustart der entsprechenden Elemente der technischen Anlage notwendig ist oder ob eine Live-Aktualisierung der technischen Anlage möglich ist, und/oder
- beim Ermitteln der Aktualisierungskonfiguration ermittelt wird, welche Auswirkungen die Softwareaktualisierung auf die technische Anlage und/oder entsprechende Elemente der technischen Anlage während der Softwareaktualisierung und/oder nach der Softwareaktualisierung hat, und/oder
- beim Ermitteln der Aktualisierungskonfiguration eine erwartete Temperaturerhöhung von einem oder mehreren Prozessoren der technischen Anlage und/oder von entsprechenden Elementen der technischen Anlage berücksichtigt wird, und/oder
- beim Ermitteln der Aktualisierungskonfiguration der erforderliche Speicherplatz und Prozessorleistung für die Softwareaktualisierung berücksichtigt wird, und/oder
- beim Ermitteln der Aktualisierungskonfiguration eine Softwarekompatibilität mit der bestehenden Software und der Softwareaktualisierung berücksichtigt wird, und/oder
- beim Ermitteln der Aktualisierungskonfiguration Lizenzanforderungen berücksichtigt werden, und/oder
- beim Ermitteln der Aktualisierungskonfiguration eine Auswirkung auf die technische Anlage bei einer Softwareaktualisierung von mehreren Elementen der technischen Anlage berücksichtigt wird, und/oder
- beim Ermitteln der Aktualisierungskonfiguration eine Kompatibilität zwischen aktualisierten und unaktualisierten Elementen der technischen Anlage berücksichtigt wird, und/oder
- beim Ermitteln der Aktualisierungskonfiguration berücksichtigt wird, ob die Softwareaktualisierung automatisch durchführbar ist oder ein manuelles Eingreifen erforderlich ist, und/oder
- beim Ermitteln der Aktualisierungskonfiguration notwendige Zugangsrechte berücksichtigt werden, und/oder
- beim Ermitteln der Aktualisierungskonfiguration berücksichtigt wird, ob eine automatisierte Prüfung von manuell durchgeführten Schritten durchführbar ist, und/oder
- beim Ermitteln der Aktualisierungskonfiguration berücksichtigt wird, ob die Softwareaktualisierung für ein entsprechendes Element angibt, wie dieses zu installieren ist, und/oder
- beim Ermitteln der Aktualisierungskonfiguration Erfahrungswerte aus früher durchgeführten Aktualisierungen einfließen können und in Form von Verbesserungen umgesetzt werden können.

4. Konfigurationsvorrichtung nach einem der vorhergehenden Ansprüche, wobei
- die Durchführung der Softwareaktualisierung der technischen Anlage simuliert wird, um die Auswirkungen der Durchführung der Softwareaktualisierung auf die technische Anlage durch eine Simulation zu ermitteln.

5. Konfigurationsvorrichtung nach Anspruch 4, wobei
- die Simulation zusätzlich Auswirkungen der Durchführung der Softwareaktualisierung auf den Produktionsprozess simuliert, und/oder
- die Simulation zusätzlich Auswirkungen der Softwareaktualisierung auf den Produktionsprozess simuliert.

6. Aktualisierungsserver zum Steuern einer Softwareaktualisierung einer technischen Anlage aufweisend:
- ein Empfangsmodul, wobei
- das Empfangsmodul dazu eingerichtet ist, eine Aktualisierungskonfiguration und/oder eine Softwareaktualisierung zu empfangen,
- die Aktualisierungskonfiguration und/oder die Softwareaktualisierung vorzugsweise von einer Konfigurationsvorrichtung nach einem der Ansprüche 1 - 5 empfangen wird;
- ein Aktualisierungssteuersystem, wobei
- das Aktualisierungssteuersystem dazu eingerichtet ist, eine Softwareaktualisierung für eine technische Anlage und/oder ein Element oder für mehreren Elemente der technischen Anlage anhand der Aktualisierungskonfiguration durchzuführen,
- die Aktualisierungskonfiguration beispielsweise Betriebsvorgaben umfasst, die während und/oder nach der Durchführung der Softwareaktualisierung durch die technische Anlage und/oder von den entsprechenden Elementen der technischen Anlage einzuhalten sind.

7. Aktualisierungsserver nach Anspruch 6, wobei
- die Aktualisierungskonfiguration eine Aktualisierungskonfiguration nach einem der Ansprüche 1 - 5 ist.

8. Aktualisierungsserver nach einem der Ansprüche 6 - 7, wobei
- der Aktualisierungsserver ein Überwachungsmodul umfasst,
- das Überwachungsmodul dazu eingerichtet ist, während der Durchführung der Softwareaktualisierung Betriebsparameter der technischen Anlage und/oder von den entsprechenden Elementen der technischen Anlage zu erfassen,
- das Überwachungsmodul dazu eingerichtet ist, ein Prüfergebnis anhand der Betriebsvorgaben und der Betriebsparameter zu ermitteln,
- eine weitere Durchführung der Softwareaktualisierung anhand des Prüfergebnisses gesteuert wird,
- beispielsweise bei einem Überschreiten der Betriebsvorgaben durch die Betriebsparameter ein Alarm ausgelöst wird und/oder die Softwareaktualisierung abgebrochen wird,
- beispielsweise bei einem Einhalten der Betriebsvorgaben durch die Betriebsparameter die Softwareaktualisierung fortgeführt wird.

9. Aktualisierungsserver nach einem der Ansprüche 6 - 8, wobei
- der Aktualisierungsserver einen Schlüsselspeicher für Zugangsdaten und/oder Lizenzdaten und/oder Schlüsselmaterial, wie z. B. kryptographische Schlüssel, umfasst,
- der Aktualisierungsserver beispielsweise das entsprechende Schlüsselmaterial und/oder die entsprechenden Zugangsdaten und/oder die entsprechenden Lizenzdaten für die Softwareaktualisierung der technischen Anlage oder eines entsprechenden Elementes der technischen Anlage nutzt,
- der Aktualisierungsserver beispielsweise das Schlüsselmaterial verwendet, um einen aufgezeichneten Verlauf der Softwareaktualisierung digital zu signieren,
- vorzugsweise das Schlüsselmaterial und/oder die Zugangsdaten und/oder die Lizenzdaten spezifisch entsprechenden Elementen der technischen Anlage zugeordnet sind und/oder spezifisch entsprechenden Teilen der Softwareaktualisierung von entsprechenden Elementen zugeordnet sind.

10. Aktualisierungsserver nach einem der Ansprüche 6 - 9, wobei
- die Softwareaktualisierung ein oder mehrere Teilpakete für die Softwareaktualisierung umfasst,
- beispielsweise entsprechende Teilpakete spezifisch für die Softwareaktualisierung von entsprechenden Elementen der technischen Anlage zugeordnet sind,
- beispielsweise die entsprechenden Teilpakete von verschiedenen Quellen bereitgestellt werden,
- beispielsweise die Teilpakete in der Softwareaktualisierung durch den Aktualisierungsserver und/oder der Konfigurationsvorrichtung gebündelt gespeichert werden.

11. Aktualisierungsserver nach einem der Ansprüche 6 - 9, wobei
- der Aktualisierungsserver ein Interface zur sicheren Kommunikation mit den entsprechenden Elementen der technischen Anlage umfasst.

12. Computerimplementiertes Verfahren zum Ermitteln einer Aktualisierungskonfiguration für eine Softwareaktualisierung für eine technische Anlage mit folgenden Verfahrensschritten:
- Erfassen von Betriebsparametern eines Produktionsprozesses einer technischen Anlage, wobei
- die Betriebsparameter Konfigurationsparameter der technischen Anlage umfassen,
- beispielsweise die Betriebsparameter des Produktionsprozesses der technischen Anlage durch ein Bewertungsmodul bewertet werden,
- beispielsweise die Betriebsparameter die Bewertung des Bewertungsmodules umfassen;
- Laden einer Softwareaktualisierung für ein oder mehrere Elemente der technischen Anlage;
- Ermitteln einer Aktualisierungskonfiguration anhand der Betriebsparameter und der Softwareaktualisierungen für die Softwareaktualisierungen der ein oder mehreren Elementen der technischen Anlage, wobei
die Aktualisierungskonfiguration beispielsweise anhand der Betriebsparameter und der Softwareaktualisierungen der ein oder Elemente der technischen Anlage optimiert wird;
- Übermitteln der Aktualisierungskonfiguration und/oder die Softwareaktualisierung an einen Aktualisierungsserver, wobei
∘ der Aktualisierungsserver die Softwareaktualisierung der ein oder mehrere Elemente der technischen Anlage anhand der Aktualisierungskonfiguration steuert und/oder überwacht und/oder aufzeichnet.

13. Computerimplementiertes Verfahren zum Steuern einer Softwareaktualisierung mit folgenden Verfahrensschritten:
- Empfangen einer Aktualisierungskonfiguration und/oder einer Softwareaktualisierung, wobei
- die Aktualisierungskonfiguration und/oder die Softwareaktualisierung vorzugsweise von einer Konfigurationsvorrichtung nach einem der Ansprüche 1 - 5 empfangen wird;
- Durchführen einer Softwareaktualisierung einer technischen Anlage und/oder einem oder mehreren Elementen der technischen Anlage anhand der Aktualisierungskonfiguration, wobei
- die Aktualisierungskonfiguration beispielsweise Betriebsvorgaben umfasst, die während und/oder nach der Durchführung der Softwareaktualisierung durch die technische Anlage und/oder von den entsprechenden Elementen der technischen Anlage einzuhalten sind.

14. Computerprogrammprodukt mit Programmbefehlen zur Durchführung des Verfahrens nach Anspruch 12 oder 13.

15. Bereitstellungsvorrichtung für das Computerprogrammprodukt nach Anspruch 14, wobei
- die Bereitstellungsvorrichtung das Computerprogrammprodukt speichert und/oder bereitstellt,
- beispielsweise das Computerprogrammprodukt kryptographisch geschützt ist,
- beispielsweise der kryptographische Schutz eine digitale Signatur und/oder eine Verschlüsselung des Computerprogramproduktes ist und/oder eine kryptographische Prüfsumme ist,
- beispielsweise der kryptographische Schutz mittels des Schlüsselmaterials des Aktualisierungsservers überprüft und/oder entfernt werden kann.
